# EUROPEAN PATENT SPECIFICATION

(11) **EP 3 792 816 B1**
(45) Date of publication and mention of the grant of the patent: **16.04.2025**
(21) Application number: 19204625.8
(22) Date of filing: 22.10.2019
(51) Int. Cl.: G06V 40/13, G06V 40/12

(54) **FINGERPRINT IDENTIFICATION DEVICE AND DRIVING METHOD THEREOF**
FINGERABDRUCKIDENTIFIZIERUNGSVORRICHTUNG UND ANSTEUERUNGSVERFAHREN DAFÜR
DISPOSITIF D'IDENTIFICATION D'EMPREINTES DIGITALES ET SON PROCÉDÉ DE COMMANDE

(30) Priority: 16.09.2019 TW 108133203
(43) Date of publication of application: 17.03.2021
(73) Proprietor: Acer Incorporated, New Taipei City 221 (TW)
(72) Inventor: Kuo, Jin-Ting, New Taipei City 221 (TW)
(74) Representative: 2K Patentanwälte Blasberg Kewitz & Reichel

(56) References cited:
- US-A1- 2015 010 265
- US-A1- 2019 113 670

## Description

### BACKGROUND

### Field of the Disclosure

The present disclosure relates to an optical device and a driving method thereof, and particularly to a fingerprint identification device and a driving method thereof.

### Description of Related Art

Current fingerprint identification module uses the feature points of fingerprint pattern to perform identification. Generally speaking, a complete fingerprint has about 50 feature points. When there are more identifiable feature points, the security level of fingerprint identification is higher. However, in consideration of cost and area, the area of the capacitive or optical fingerprint identification module is usually limited, and therefore it has become a trend to improve the security level of fingerprint identification with limited area.
US2019/113670 A1 discloses systems and methods for imaging an object. An optical sensor for imaging an input object comprises a sensor substrate comprising detector pixels, a scattering layer, a cover layer including a sensing surface, wherein the scattering layer is disposed between the sensor substrate and the cover layer; and a light source. The optical sensor is configured to illuminate the light source causing light beams to emanate from the light source to produce an effect of a point light source at the scattering layer; and acquire image data, from one or more detector pixels, of an input object in contact with the sensing surface, wherein the image data corresponds to light from the light source that is reflected at the sensing surface of the cover layer.
US2015/010265 A1 discloses a contact image sensor having an illumination, a first SBG array device, a transmission grating, a second SBG array device, a waveguiding layer having a multiplicity of waveguide cores separated by cladding material; an upper clad layer; and a plated. The sensor also includes an optical device for coupling light from an illumination source into the first SBG array and an optical coupler for coupling light out of the cores into output optical paths coupled to a detector having at least one photosensitive element.

### SUMMARY OF THE DISCLOSURE

The disclosure provides a fingerprint identification device, which can increase the number of feature points and has a lower cost.

The present invention is defined by the appended claims.

In order to make the aforementioned features and advantages of the disclosure more comprehensible, embodiments accompanying figures are described in detail below.

### BRIEF DESCRIPTION OF THE DRAWINGS

FIG 1 is a schematic cross-sectional view of a fingerprint identification device according to an embodiment of the present disclosure.
FIG. 2 is a schematic cross-sectional view of the electrically switchable pattern structure of FIG 1.
FIG 3A-FIG 3C are schematic top views of conductive layers of an electrically switchable pattern structure according to some embodiments of the present disclosure.
FIG. 4A-FIG 4D are schematic views of different patterns of electrically switchable pattern structures exhibited in different modes according to some embodiments of the present disclosure.
FIG 5A to FIG 5C are schematic cross-sectional views of a fingerprint identification device in different modes according to an embodiment of the disclosure.
FIG. 6A to FIG 6C illustrate different types of fingerprints.
FIG 7A-FIG 7D are interference patterns generated when a pattern of an electrically switchable pattern structure interferes with a fingerprint according to some embodiments of the present disclosure.

### DESCRIPTION OF EMBODIMENTS

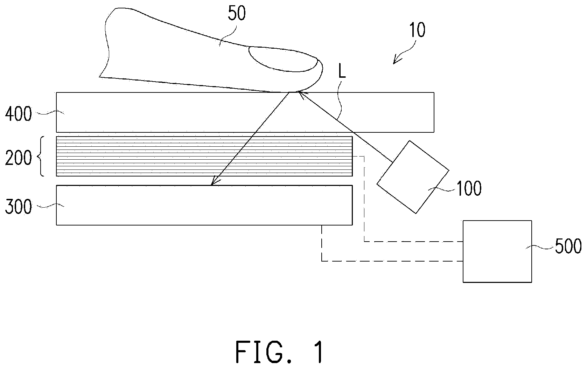

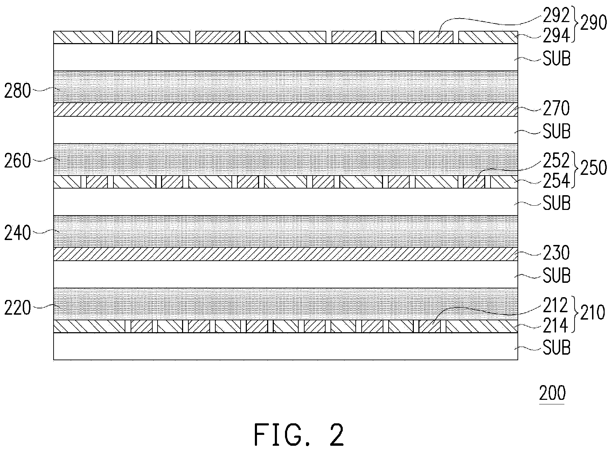

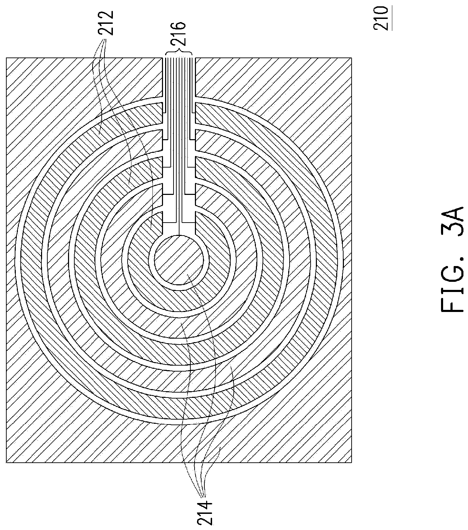

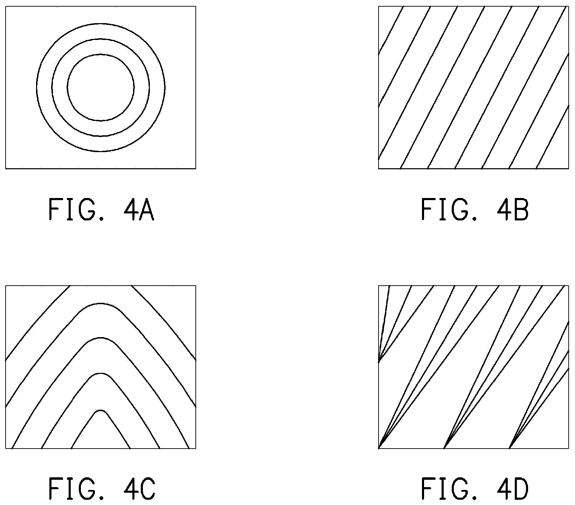

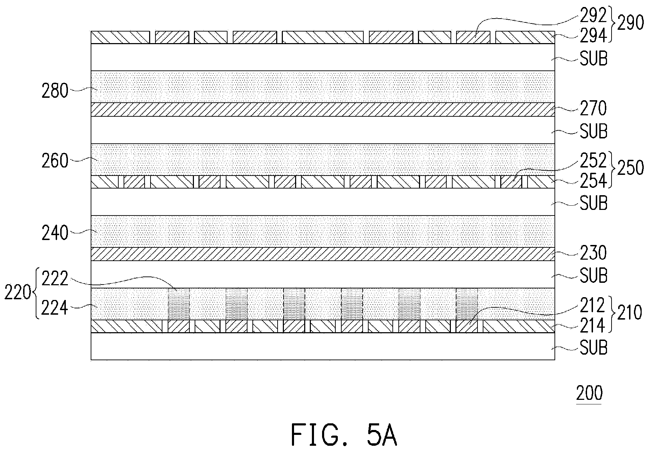

FIG. 1 is a schematic cross-sectional view of a fingerprint identification device according to an embodiment of the present disclosure. FIG. 2 is a schematic cross-sectional view of the electrically switchable pattern structure of FIG. 1. FIG. 3A-FIG. 3C are schematic top views of conductive layers of an electrically switchable pattern structure according to some embodiments of the present disclosure. FIG. 4A-FIG. 4D are schematic views of different patterns of electrically switchable pattern structures exhibited in different modes according to some embodiments of the present disclosure. FIG. 5A to FIG. 5C are schematic cross-sectional views of a fingerprint identification device in different modes according to an embodiment of the disclosure.

Referring to FIG. 1, the fingerprint identification device 10 of the present embodiment includes a light source 100, an electrically switchable pattern structure 200, an image sensing element 300, and a cover 400. The light source 100 is configured to emit a light L to an object 50. The electrically switchable pattern structure 200 is disposed on the transmission path of the light L reflected by the object 50. The image sensing element 300 is configured to sense the light L passing through the electrically switchable pattern structure 200 to form at least one image. The cover 400 is disposed on the electrically switchable pattern structure 200 to provide protection.

In this embodiment, the object 50 is, for example, a user's finger. The light L emitted by the light source 100 can be a single wavelength light or multiple wavelength light. The image sensing element 300 is, for example, a Charge Coupled Device (CCD) or a Complementary Metal-Oxide Semiconductor (CMOS) sensor or other suitable sensing element. Specifically, in the embodiment, the image sensing element 300 can continuously receive the light L reflected by the object 50 and passing through the electrically switchable pattern structure 200 in a time interval to capture the image, and the image sensing element 300 outputs the data of the image to the processor 500, so that the processor 500 performs analysis according to the data of the image. In the embodiment, the processor 500 is, for example, a central processing unit (CPU), a system on chip (SOC), or other programmable general-purpose or specific-purpose microprocessor, digital signal processor (DSP), programmable controller, application specific integrated circuits (ASIC), programmable logic device (PLD), other similar processing devices or a combination of the above. In addition, the fingerprint identification device 10 may further include a storage device (not shown), such as any type of fixed or removable random access memory (RAM), read-only memory (ROM), flash memory or the like or a combination of the above. In the embodiment, the storage device is configured to store image data, picture data, and a plurality of modules of the embodiments of the present disclosure, so that the processor 500 can read the storage device and execute the data and modules to implement fingerprint identification method according to various embodiments of the present disclosure.

In this embodiment, the electrically switchable pattern structure 200 can be switched to a different pattern under a specific driving electric field, and the pattern of the electrically switchable pattern structure 200 can be designed such that the pattern can interfere with the user's fingerprint to generate interference stripes (or referred to as moiré), and the fingerprint identification device 10 can perform fingerprint identification by using the interference stripes as a feature point.

Referring to FIG. 2, the electrically switchable pattern structure 200 of the present embodiment includes a first conductive layer 210, a first electrically switchable optical layer 220, a second conductive layer 230, and a second electrically switchable optical layer 240, a third conductive layer 250, a third electrically switchable optical layer 260, a fourth conductive layer 270, a fourth electrically switchable optical layer 280, and a fifth conductive layer 290 stacked in sequence.

The first electrically switchable optical layer 220, the second electrically switchable optical layer 240, the third electrically switchable optical layer 260, and/or the fourth electrically switchable optical layer 280 are, for example, composed of electrically switchable optical materials. For example, such electrically switchable optical materials can be a liquid crystal material, such as a polymer-dispersed liquid crystal (PDLC) material. A polymer-dispersed liquid crystal film is a composite film in which anisotropic liquid crystal is uniformly dispersed in a polymer, and an external electric field is used to regulate a refractive index relationship between the liquid crystal and polymer to form a light scattering state (for example, a haze and non-transparent state) or a light-transmitting state (for example, a transparent state).

Thus, the optical properties of the first electrically switchable optical layer 220, the second electrically switchable optical layer 240, the third electrically switchable optical layer 260, and/or the fourth electrically switchable optical layer 280 can be changed under a specific driving electric field. For example, some or all of each of the first electrically switchable optical layer 220, the second electrically switchable optical layer 240, the third electrically switchable optical layer 260, and the fourth electrically switchable optical layer 280 can be changed from a light-shielding haze state into a transparent state under a certain electric field. Thus, the electrically switchable pattern structure 200 can switch different patterns through the optical properties of the first electrically switchable optical layer 220, the second electrically switchable optical layer 240, the third electrically switchable optical layer 260, and/or the fourth electrically switchable optical layer 280.

As shown in FIG. 2 and FIG. 3A, the first conductive layer 210 has a first pattern defining portion 212 and a first filling portion 214, and the first pattern defining portion 212 defines the first conductive pattern (FIG. 3A shows the pattern as concentric circles as an example), the first filling portion 214 is located in a region excluding the first pattern defining portion 212 and is spaced apart from the first pattern defining portion 212. Specifically, the first filling portion 214 is closely adjacent to the first pattern defining portion 212, and the first filling portion 214 may surround the first pattern defining portion 212 and/or fill the gap in the first pattern defining portion 212.

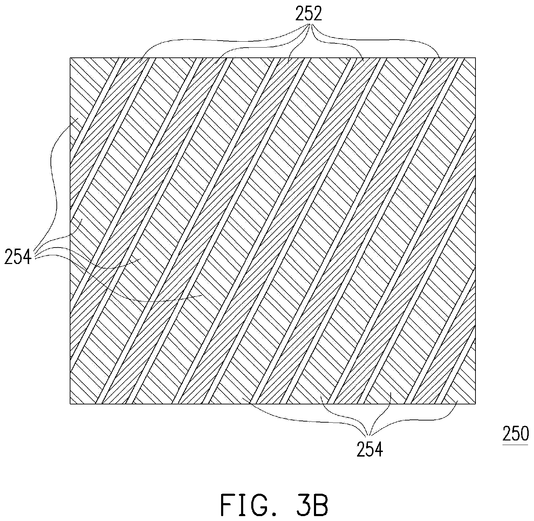

As shown in FIG. 2 and FIG. 3B, the third conductive layer 250 has a second pattern defining portion 252 and a second filling portion 254, the second pattern defining portion 252 defines the second conductive pattern (FIG. 3B shows the pattern as diagonal lines as an example), and the second filling portion 254 is located in a region excluding the second pattern defining portion 252 and spaced apart from the second pattern defining portion 252. Specifically, the second filling portion 254 is closely adjacent to the second pattern defining portion 252, and the second filling portion 254 may surround the second pattern defining portion 252 and/or fill the gap in the second pattern defining portion 252.

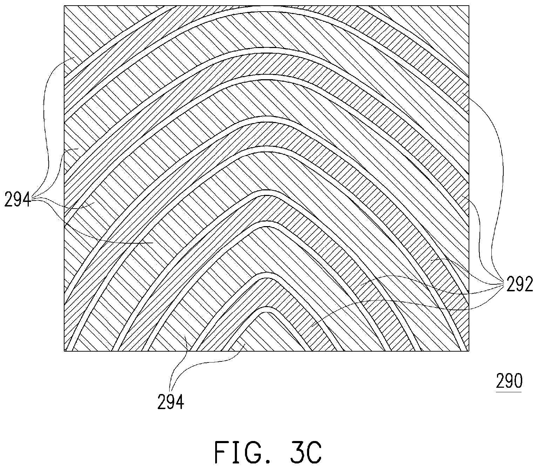

As shown in FIG. 2 and FIG. 3C, the fifth conductive layer 290 has a third pattern defining portion 292 and a third filling portion 294, the third pattern defining portion 292 defines the third conductive pattern (FIG. 3C shows the pattern as arc-shaped stripes as an example), and the third filling portion 294 is located in a region excluding the third pattern defining portion 292 and spaced apart from the third pattern defining portion 292. Specifically, the third filling portion 294 is closely adjacent to the third pattern defining portion 292, and the third filling portion 294 may surround the third pattern defining portion 292 and/or fill the gap in the third pattern defining portion 292.

The first conductive layer 210, the second conductive layer 230, the third conductive layer 250, the fourth conductive layer 270, and the fifth conductive layer 290 may be transparent conductive films such as indium tin oxide (ITO). In this embodiment, the first conductive pattern of the first conductive layer 210, the second conductive pattern of the third conductive layer 250, and the third conductive pattern of the fifth conductive layer 290 are all different. In other embodiments, at least the first conductive pattern of the first conductive layer 210 and the second conductive pattern of the third conductive layer 250 are similar, and they are rotated by an angle relative to each other or deviated relative to each other. For example, they may be exhibited as diagonal lines, and the extending directions of their diagonal lines are inclined at different angles with respect to the edge of the electrically switchable pattern structure 200; or they may be exhibited as concentric circles, and the center of the concentric circles of one of them is located at the center of the electrically switchable pattern structure 200, while the center of the concentric circles of the other is deviated from the center of the electrically switchable pattern structure 200.

Each of the first conductive layer 210, the third conductive layer 250, and the fifth conductive layer 290 may further include a plurality of outer leads. For example, as shown in FIG. 3A, the plurality of outer leads 216 of the first conductive layer 210 can respectively electrically couple the first pattern defining portion 212 and the first filling portion 214 to the input voltage terminal (not shown) of the outer environment to independently supply the voltage to the first pattern defining portion 212 and the first filling portion 214. The outer leads are omitted from FIG. 3B and FIG. 3C, persons having ordinary knowledge of the art can adjust the configuration of the outer leads according to the design requirements.

In addition, the second conductive layer 230 and the fourth conductive layer 270 may be common electrodes. The second conductive layer 230 and the fourth conductive layer 270 are, for example, a full-surface conductive film having no pattern. In addition, as shown in FIG. 2, the electrically switchable pattern structure 200 further includes a plurality of substrate layers SUB, and the first conductive layer 210, the second conductive layer 230, the third conductive layer 250, the fourth conductive layer 270, and the fifth conductive layer 290 are respectively disposed on corresponding ones of the substrate layers SUB. The substrate layer SUB is, for example, a plastic substrate.

In this embodiment, the required voltage signal can be applied to the first conductive layer 210, the second conductive layer 230, the third conductive layer 250, the fourth conductive layer 270, and/or the fifth conductive layer 290 to generate a desired driving electric field in the corresponding first electrically switchable optical layer 220, the second electrically switchable optical layer 240, the third electrically switchable optical layer 260, and/or the fourth electrically switchable optical layer 280.

The driving method of the fingerprint identification device 10 includes: in a first mode, making the electrically switchable pattern structure 200 to exhibit a first pattern such that the image sensing element 300 senses the first image; in a second mode, making the electrically switchable pattern structure 200 to exhibit a second pattern different from the first pattern such that the image sensing element 300 senses a second image different from the first image; and in a third mode, making the electrically switchable pattern structure 200 to exhibit a third pattern different from the first pattern and the second pattern such that the image sensing element 300 senses a third image different from the first image and the second image.

In this embodiment, the electrically switchable pattern structure 200 can be coupled to the processor 500, and the processor can be configured to drive the electrically switchable pattern structure 200 to sequentially execute the first mode, the second mode, and the third mode, such that the image sensing element 300 can respectively sense the first image, the second image, and the third image. The processor 500 can perform fingerprint identification analysis according to the data of the first image, the second image, and the third image.

In this embodiment, the first pattern may correspond to the first pattern defining portion 212 (i.e., the first conductive pattern) of the first conductive layer 210, and thus the first pattern may be, for example, a concentric circle pattern as shown in FIG. 4A; the second pattern may correspond to the second pattern defining portion 252 (i.e., the second conductive pattern) of the third conductive layer 250, and thus the second pattern may be, for example, the diagonal line pattern as shown in FIG. 4B; the third pattern corresponds to the third pattern defining portion 292 (i.e., the third conductive pattern) of the fifth conductive layer 290, and thus the third pattern can be, for example, an arc-shaped stripe pattern as shown in FIG. 4C, but the disclosure is not limited thereto. In other embodiments, the pattern exhibited by the electrically switchable pattern structure 200 may also be other patterns, such as the plurality of diagonal lines shown in FIG. 4D, wherein the extension directions of the plurality of diagonal lines are inclined by different angles respectively relative to the edge of the electrically switchable pattern structure 200.

Referring to FIG. 5A, in the first mode, the method of making the electrically switchable pattern structure 200 to exhibit the first pattern includes applying a voltage to the first conductive layer 210, the second conductive layer 230, the third conductive layer 250, the fourth conductive layer 270 and the fifth conductive layer 290, such that first portion 222 of the first electrically switchable optical layer 220 exhibits a haze state (non-transparent), the second portion 224 excluding the first portion 222 of the first electrically switchable optical layer 220 exhibits a transparent state, and the second electrically switchable optical layer 240, the third electrically switchable optical layer 260, and the fourth electrically switchable optical layer 280 exhibit a transparent state. Herein, the first portion 222 of the first electrically switchable optical layer 220, for example, corresponds to the first pattern defining portion 212 (i.e., the first conductive pattern) of the first conductive layer 210, and the second portion 224 of the first electrically switchable optical layer 220, for example, corresponds to the first filling portion 214 of the first conductive layer 210. It should be noted that the correspondence here means that the vertical projections of the two can overlap each other. That is, the vertical projection of the first portion 222 of the first electrically switchable optical layer 220 may overlap the vertical projection of the first pattern defining portion 212 of the first conductive layer 210, while the vertical projection of the second portion 224 of the first electrically switchable optical layer 220 may overlap the vertical projection of the first filling portion 214 of the first conductive layer 210.

In detail, in the first mode, the same voltage may be applied to the first pattern defining portion 212 of the first conductive layer 210 and the second conductive layer 230, such that the first portion 222 of the first electrically switchable optical layer 220 exhibit a haze state (non-transparent); different voltages are applied to the first filling portion 214 of the first conductive layer 210 and the second conductive layer 230, such that the second portion 224 excluding the first portion 222 of the first electrically switchable optical layer 220 exhibit a transparent state; different voltages are applied to the second conductive layer 230 and the third conductive layer 250 such that the second electrically switchable optical layer 240 exhibit a transparent state; different voltages are applied to the third conductive layer 250 and the fourth conductive layer 270, such that the third electrically switchable optical layer 260 exhibits a transparent state; and different voltages are applied to the fourth conductive layer 270 and the fifth conductive layer 290, such that the fourth electrically switchable optical layer 280 exhibit a transparent state. For example, the first pattern defining portion 212 of the first conductive layer 210, the second conductive layer 230 and the fourth conductive layer 270 may be applied with a first voltage, and the first filling portion 214 of the first conductive layer 210, the third conductive layer 250 and the fifth conductive layer 290 can be applied with a second voltage. It is required that the voltage difference between the first voltage and the second voltage be greater than the threshold at which the electrically switchable optical layers (i.e., the first electrically switchable optical layer 220, the second electrically switchable optical layer 240, the third electrically switchable optical layer 260, and the fourth electrically switchable optical layer 280) exhibit a transparent state, wherein one of the first voltage and the second voltage may be, for example, 0 volt or grounded. Thus, in the first mode, the first portion 222 of the first electrically switchable optical layer 220 can remain hazy (non-transparent) while the second portion 224 of the first electrically switchable optical layer 220, the second electrically switchable optical layer 240, the third electrically switchable optical layer 260, and the fourth electrically switchable optical layer 280 can be turned into a transparent state. In this way, the electrically switchable pattern structure 200 can exhibit a first pattern, wherein the first pattern is, for example, a concentric pattern as shown in FIG. 4A.

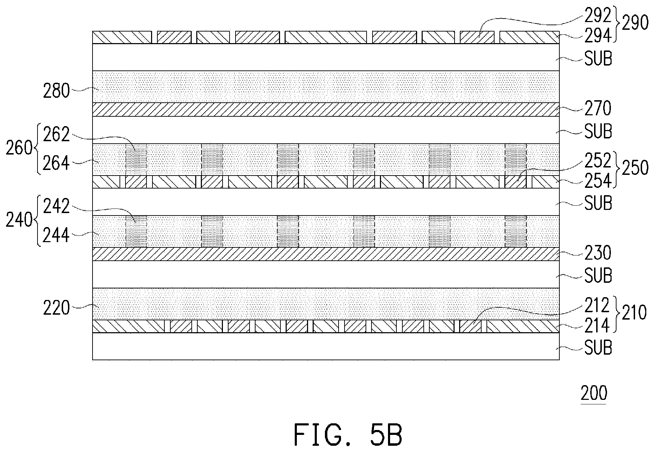

Referring to FIG. 5B, in the second mode, the method of making the electrically switchable pattern structure 200 to exhibit the second pattern includes applying a voltage to the first conductive layer 210, the second conductive layer 230, the third conductive layer 250, the fourth conductive layer 270 and the fifth conductive layer 290, such that first portion 242 of the second electrically switchable optical layer 240 exhibits a haze (non-transparent) state, the second portion 244 excluding the first portion 242 of the second electrically switchable optical layer 240 exhibits a transparent state, the first portion 262 of the third electrically switchable optical layer 260 exhibits a haze (non-transparent) state, the second portion 264 excluding the first portion 262 of the third electrically switchable optical layer 260 exhibits a transparent state, and the first electrically switchable optical layer 220 and the fourth electrically switchable optical layer 280 exhibit a transparent state. Here, the first portion 242 of the second electrically switchable optical layer 240 and the first portion 262 of the third electrically switchable optical layer 260, for example, correspond to the second pattern defining portion 252 of the third conductive layer 250, the second portion 244 of the second electrically switchable optical layer 240 and the second portion 264 of the third electrically switchable optical layer 260, for example, correspond to the second filling portions 254 of the third conductive layer 250. It should be noted that the correspondence here means that the vertical projections of the two can overlap each other. That is, the vertical projection of the first portion 242 of the second electrically switchable optical layer 240 and the vertical projection of the first portion 262 of the third electrically switchable optical layer 260 may overlap the vertical projection of the second pattern defining portion 252 of the third conductive layer 250, and the vertical projection of the second portion 244 of the second electrically switchable optical layer 240 and the vertical projection of the second portion 264 of the third electrically switchable optical layer 260 may overlap the vertical projection of the second filling portion 254 of the third conductive layer 250.

In detail, in the second mode, the same voltage may be applied to the second pattern defining portion 252 of the third conductive layer 250 and the second conductive layer 230 such that the first portion 242 of the second electrically switchable optical layer 240 exhibits a haze (non-transparent) state; different voltages are applied to the second filling portion 254 of the third conductive layer 250 and the second conductive layer 230 such that the second portion 244 excluding the first portion 242 of the second electrically switchable optical layer 240 exhibits a transparent state; the same voltage is applied to the second pattern defining portion 252 of the third conductive layer 250 and the fourth conductive layer 270 such that the first portion 262 of the third electrically switchable optical layer 260 exhibits a haze (non-transparent) state; different voltages are applied to the second filling portion 254 of the third conductive layer 250 and the fourth conductive layer 270 such that the second portion 264 excluding the first portion 262 of the third electrically switchable optical layer 260 exhibits a transparent state; different voltages are applied to the first conductive layer 210 and the second conductive layer 230 such that the first electrically switchable optical layer 220 exhibits a transparent state; and different voltages are applied to the fourth conductive layer 270 and the fifth conductive layer 290 such that the fourth electrically switchable optics layer 280 exhibits a transparent state. For example, the second pattern defining portion 252 of the third conductive layer 250, the second conductive layer 230 and the fourth conductive layer 270 may be applied with the first voltage, and the second filling portion 254 of the third conductive layer 250, the first conductive layer 210 and the fifth conductive layer 290 can be applied with the second voltage. It is required that the voltage difference between the first voltage and the second voltage be greater than the threshold at which the electrically switchable optical layers (i.e., the first electrically switchable optical layer 220, the second electrically switchable optical layer 240, the third electrically switchable optical layer 260, and the fourth electrically switchable optical layer 280) exhibit a transparent state, wherein one of the first voltage and the second voltage may be, for example, 0 volt or grounded. Thus, in the second mode, the first portion 242 of the second electrically switchable optical layer 240 and the first portion 262 of the third electrically switchable optical layer 260 can remain hazy (non-transparent), and the second portion 244 of the second electrically switchable optical layer 240, the second portion 264 of the third electrically switchable optical layer 260, the first electrically switchable optical layer 220, and the fourth electrically switchable optical layer 280 can be turned into a transparent state. In this way, the electrically switchable pattern structure 200 can exhibit the second pattern, wherein the second pattern is, for example, the diagonal line pattern shown in FIG. 4B.

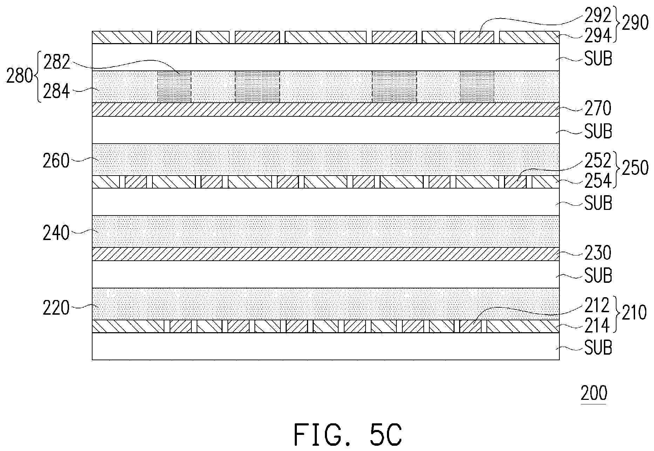

Referring to FIG. 5C, in the third mode, the method of making the electrically switchable pattern structure 200 to exhibit the third pattern includes applying a voltage to the first conductive layer 210, the second conductive layer 230, the third conductive layer 250, the fourth conductive layer 270 and the fifth conductive layer 290, such that first portion 282 of the fourth electrically switchable optical layer 280 exhibits the haze (non-transparent) state, the second portion 284 excluding the first portion 282 of the fourth electrically switchable optical layer 280 exhibits a transparent state, and the first electrically switchable optical layer 220, the second electrically switchable optical layer 240, and the third electrically switchable optical layer 260 exhibit a transparent state. Here, the first portion 282 of the fourth electrically switchable optical layer 280, for example, corresponds to the third pattern defining portion 292 of the fifth conductive layer 290, the second portion 284 of the fourth electrically switchable optical layer 280, for example, corresponds to the third filling portion 294 of the fifth conductive layer 290. It should be noted that the correspondence here means that the vertical projections of the two can overlap each other. That is, the vertical projection of the first portion 282 of the fourth electrically switchable optical layer 280 can overlap the vertical projection of the third pattern defining portion 292 of the fifth conductive layer 290, and the vertical projection of the second portion 284 the fourth electrically switchable optical layer 280 may overlap the vertical projection of the third filling portion 294 of the fifth conductive layer 290.

In detail, in the third mode, the same voltage may be applied to the third pattern defining portion 292 of the fifth conductive layer 290 and the fourth conductive layer 270 such that the first portion 282 of the fourth electrically switchable optical layer 280 exhibits a haze (non-transparent) state; different voltages are applied to the third filling portion 294 of the fifth conductive layer 290 and the fourth conductive layer 270 such that the second portion 284 excluding the first portion 282 of the fourth electrically switchable optical layer 280 exhibits a transparent state; different voltages are applied to the fourth conductive layer 270 and the third conductive layer 250 such that the third electrically switchable optical layer 260 exhibits a transparent state; different voltages are applied to the third conductive layer 250 and the second conductive layer 230, such that the second electrically switchable optical layer 240 exhibits a transparent state; and different voltages are applied to the second conductive layer 230 and the first conductive layer 210, such that the first electrically switchable optical layer 220 exhibits a transparent state. For example, the third pattern defining portion 292 of the fifth conductive layer 290, the fourth conductive layer 270 and the second conductive layer 230 may be applied with the first voltage, and the third filling portion 294 of the fifth conductive layer 290, the third conductive layer 250 and the first conductive layer 210 can be applied with the second voltage. It is required that the voltage difference between the first voltage and the second voltage be greater than the threshold at which the electrically switchable optical layers (i.e., the first electrically switchable optical layer 220, the second electrically switchable optical layer 240, the third electrically switchable optical layer 260, and the fourth electrically switchable optical layer 280) exhibit a transparent state, wherein one of the first voltage and the second voltage may be, for example, 0 volt or grounded. Thus, in the third mode, the first portion 282 of the fourth electrically switchable optical layer 280 can remain hazy (non-transparent), and the second portion 284 of the fourth electrically switchable optical layer 280, the third electrically switchable optical layer 260, the second electrically switchable optical layer 240, and the first electrically switchable optical layer 220 can be turned into a transparent state. In this way, the electrically switchable pattern structure 200 can exhibit the third pattern, wherein the third pattern is, for example, the arc-shaped stripe pattern shown in FIG. 4C.

It should be noted that the electrically switchable pattern structure 200 of the embodiment is an example in which three different patterns can be respectively exhibited in different modes. However, in other embodiments, the electrically switchable pattern structure 200 can exhibit more or fewer different patterns. For example, when the electrically switchable pattern structure 200 can respectively exhibit two different patterns in different modes, the third electrically switchable optical layer 260, the fourth conductive layer 270, the fourth electrically switchable optical layer 280 and the fifth conductive layer 290 may be omitted, and so forth. Alternatively, when the electrically switchable pattern structure 200 can respectively exhibit four different patterns in different modes, a fifth electrically switchable optical layer, a sixth conductive layer, a sixth electrically switchable optical layer and a seventh conductive layer may be added onto the fifth conductive layer 290, and so forth. Here, the related description of the fifth electrically switchable optical layer, the sixth conductive layer, the sixth electrically switchable optical layer, and the seventh conductive layer may be derived from descriptions about the first electrically switchable optical layer 220, the second conductive layer 230, the second electrically switchable optical layer 240 and the third conductive layer 250 and so forth, so repetition is not incorporated herein.

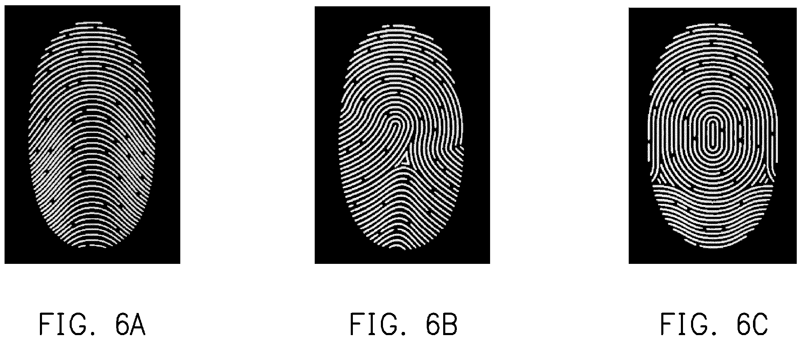

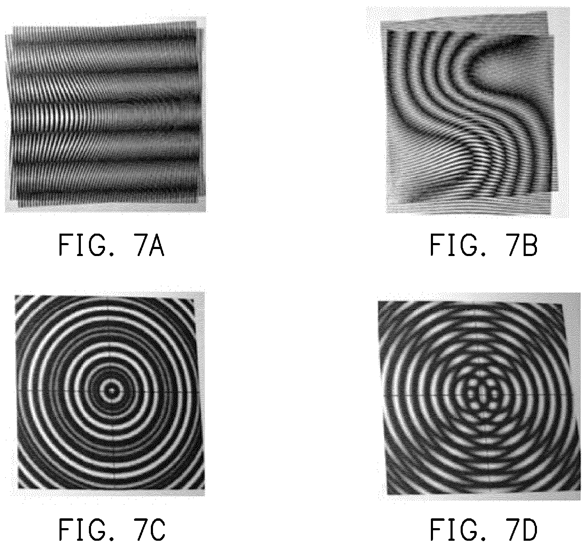

FIG. 6A to FIG. 6C illustrate different types of fingerprints. FIG. 7A-FIG. 7D are interference patterns generated when a pattern of an electrically switchable pattern structure interferes with a fingerprint according to some embodiments of the present disclosure.

In general, the patterns of fingers can be roughly divided into three types, such as an arc pattern (as shown in FIG. 6A), a loop pattern (as shown in FIG. 6B), and a whorl pattern (as shown in FIG. 6C). Therefore, corresponding interference stripes can be designed for these three types of fingerprints to obtain different feature points. For instance, when the arc pattern shown in FIG. 6A interferes with the diagonal line pattern shown in FIG. 4B, a horizontal stripe-shaped interference stripes as shown in FIG. 7A can be generated, for example; when the loop pattern shown in FIG. 6B interferes with the arc-shaped stripe pattern shown in FIG. 4C, a wave-shaped interference stripe as shown in FIG. 7B can be generated, for example; or when the whorl pattern shown in FIG. 6C interferes with the concentric circle pattern shown in FIG. 4A, the concentric circle-like interference stripe shown in FIG. 7C may be generated, or the radial interference stripe as shown in FIG. 7D may be generated, for example.

It can be seen that, through proper pattern design, the pattern of the electrically switchable pattern structure 200 can interfere with the user's fingerprint to generate interference stripes (or moiré), and the fingerprint identification device 10 can use the interference stripes as a feature point for fingerprint identification. In addition, the driving method of the fingerprint identification device 10 is to make the electrically switchable pattern structure 200 to exhibit different patterns in different modes, such that the different patterns respectively interfere with the user's fingerprints to generate different interference stripes, thereby increasing the number of feature points, which can help improve the security level of fingerprint identification. Moreover, since the lines of the interference stripes are thicker, the requirement for the resolution of the image sensing element 300 is lower, which helps to save costs. In addition, compared with the conventional fingerprint sensing chip, the electrically switchable pattern structure 200 of the embodiment adopts a polymer-dispersed liquid crystal process, so the manufacturing cost can be reduced.

In summary, the driving method of the fingerprint identification device of the present disclosure is to make the electrically switchable pattern structure exhibit different patterns in different modes. Therefore, these different patterns can respectively interfere with the user's fingerprint to generate different interference stripes to increase the number of feature points. Furthermore, since the lines of the interference stripes are thicker, the requirement for resolution of the image sensing elements is lower, which contributes to cost savings.

## Claims

1. A fingerprint identification device (10), comprising:
a light source (100) for emitting a light (L) to an object (50);
an electrically switchable pattern structure (200) disposed on a transmission path of the light (L) reflected by the object (50), and the electrically switchable pattern structure (200) comprising a first conductive layer (210), a first electrically switchable optical layer (220), a second conductive layer (230), a second electrically switchable optical layer (240), and a third conductive layer (250) stacked in sequence,
wherein the first conductive layer (210) has a first pattern defining portion (212) and a first filling portion (214), the first pattern defining portion (212) defines a first conductive pattern, the first filling portion (214) is located in a region excluding the first pattern defining portion (212) and spaced apart from the first pattern defining portion (212),
the second conductive layer (230) is a common electrode;
the third conductive layer (250) has a second pattern defining portion (252) and a second filling portion (254), the second pattern defining portion (252) defines a second conductive pattern, and the second filling portion (254) is located in a region excluding the second pattern defining portion (252) and spaced apart from the second pattern defining portion (252),
wherein each of the first conductive pattern of the first conductive layer and the second conductive pattern of the third conductive layer is exhibited as concentric circles. diagonal lines or arc-shaped stripes, and
wherein the first conductive pattern of the first conductive layer (210) and the second conductive pattern of the third conductive layer (250) are different;
a processor (500) configured to drive the electrically switchable pattern structure (200) to sequentially execute a first mode and a second mode,
wherein, in the first mode, a voltage is applied to the first conductive layer (210), the second conductive layer (230), and the third conductive layer (250) such that a first portion (222) of the first electrically switchable optical layer (220) corresponding to the first conductive pattern exhibits a haze state, a second portion (224) of the first electrically switchable optical layer (220) excluding the first portion (222) of the first electrically switchable optical layer (220) exhibits a transparent state, and the second electrically switchable optical layer (240) exhibits the transparent state, and
in the second mode. a voltage is applied to the first conductive layer (210) the second conductive layer (230) and the third conductive layer (250) such that a first portion of the second electrically switchable optical layer corresponding to the second conductive pattern exhibits a haze state, a second portion of the second electrically switchable optical layer (240) excluding the first portion of the second electrically switchable optical layer (240) exhibits a transparent state, and the first electrically switchable optical layer exhibits the transparent state; and
an image sensing element (300) configured to sense the light (L) passing through the electrically switchable pattern structure (200) to form a first image in the first mode and a second image in the second mode.
wherein the processor (500) is further configured to perform fingerprint identification analysis according to the first image and the second image.

2. The fingerprint identification device (10) of claim 1, wherein a material of the first electrically switchable optical layer (220) or the second electrically switchable optical layer (240) comprises a polymer-dispersed liquid crystal material.

3. The fingerprint identification device (10) of claim 1, wherein the electrically switchable pattern structure (200) further comprises a plurality of substrate layers (SUB), and the first conductive layer (210), the second conductive layer (230), and the third conductive layer (250) are respectively disposed on corresponding ones of the substrate layers (SUB).

4. The fingerprint identification device (10) of claim 1, wherein the electrically switchable pattern structure (200) further comprises a third electrically switchable optical layer (260), a fourth conductive layer (270), a fourth electrically switchable optical layer (280), and a fifth conductive layer (290), wherein a third conductive pattern of the fifth conductive layer (290) is different from the first conductive pattern of the first conductive layer (210) and the second conductive pattern of the third conductive layer (250).

5. The fingerprint identification device (10) of claim 1, wherein the fourth conductive layer (270) is a common electrode.

6. A driving method of a fingerprint identification device (10), wherein the fingerprint identification device (10) comprises a light source (100), an electrically switchable pattern structure (200) and an image sensing element (300), the light source (100) is configured to emit a light (L) to an object (50), the electrically switchable pattern structure (200) is disposed on a transmission path of the light (L) reflected by the object (50), the electrically switchable pattern structure (200) comprises a first conductive layer (210), a first electrically switchable optical layer (220), a second conductive layer (230), a second electrically switchable optical layer (240)and a third conductive layer (250) stacked in sequence,
wherein the first conductive layer (210) has a first pattern defining portion (212) and a first filling portion (214), the first pattern defining portion (212) defines a first conductive pattern, the first filling portion (214) is located in a region excluding the first pattern defining portion (212) and spaced apart from the first pattern defining portion (212),
the second conductive layer (230) is a common electrode;
the third conductive layer (250) has a second pattern defining portion (252) and a second filling portion (254), the second pattern defining portion (252) defines a second conductive pattern, and the second filling portion (254) is located in a region excluding the second pattern defining portion (252) and spaced apart from the second pattern defining portion (252),
wherein each of the first conductive pattern of the first conductive layer and the second conductive pattern of the third conductive layer is exhibited as concentric circles. diagonal lines or arc-shaped stripes, and
wherein the first conductive pattern of the first conductive layer (210) and the second conductive pattern of the third conductive layer (250) are different;
a processor (500) drives the electrically switchable pattern structure (200) to sequentially execute a first mode and a second mode,
wherein, in the first mode, a voltage is applied to the first conductive layer (210), the second conductive layer (230), and the third conductive layer (250) such that a first portion (222) of the first electrically switchable optical layer (220) corresponding to the first conductive pattern exhibits a haze state, a second portion (224) of the first electrically switchable optical layer (220) excluding the first portion (222) of the first electrically switchable optical layer (220) exhibits a transparent state, and the second electrically switchable optical layer (240) exhibits the transparent state, and
in the second mode, a voltage is applied to the first conductive layer (210) the second conductive layer (230) and the third conductive layer (250) such that a first portion of the second electrically switchable optical layer corresponding to the second conductive pattern exhibits a haze state, a second portion of the second electrically switchable optical layer (240) excluding the first portion of the second electrically switchable optical layer (240) exhibits a transparent state, and the first electrically switchable optical layer exhibits the transparent state; and
an image sensing element (300) sense the light (L) passing through the electrically switchable pattern structure (200) to form a first image in the first mode and a second image in the second mode.
wherein the processor (500) performs fingerprint identification analysis according to the first image and the second image.

7. The driving method of claim 6, wherein a material of the first electrically switchable optical layer (220) or the second electrically switchable optical layer (240) comprises a polymer-dispersed liquid crystal material.

8. The driving method of claim 6, wherein in the first mode:
the same voltage is applied to the first pattern defining portion (212) and the second conductive layer (230) such that the first portion (222) corresponding to the first conductive pattern of the first electrically switchable optical layer (220) exhibits the haze state;
different voltages are applied to the first filling portion (214) and the second conductive layer (230) such that the second portion (224) excluding the first portion (222) of the first electrically switchable optical layer (220) exhibits the transparent state; and
different voltages are applied to the second conductive layer (230) and the third conductive layer (250) such that the second electrically switchable optical layer (240) exhibits the transparent state.

9. The driving method of claim 6, wherein in the second mode :
the same voltage to the second pattern defining portion (252) is applied and the second conductive layer (230) such that the third portion corresponding to the second conductive pattern of the second electrically switchable optical layer (240) exhibits the haze state;
different voltages to the second filling portion (254) are applied and the second conductive layer (230) such that the fourth portion excluding the third portion of the second electrically switchable optical layer (240) exhibits the transparent state; and
different voltages to the second conductive layer (230) are applied and the first conductive layer (210) such that the first electrically switchable optical layer (220) exhibits the transparent state.

10. The driving method of claim 6, wherein the first mode and the second mode are sequentially executed to respectively sense the first image and the second image.

11. The driving method of claim 6, wherein the light (L) reflected by the object (50) interferes with the first pattern or the second pattern to generate interference stripes such that the image sensing element (300) senses the interference stripes to form the first image or the second image.

## Patentansprüche

1. Eine Fingerabdruck-Identifizierungsvorrichtung (10), umfassend:
eine Lichtquelle (100) zum Aussenden von Licht (L) auf ein Objekt (50);
eine elektrisch schaltbare Musterstruktur (200), die auf einem Übertragungspfad des von dem Objekt (50) reflektierten Lichts (L) angeordnet ist, und wobei die elektrisch schaltbare Musterstruktur (200) eine erste leitende Schicht (210), eine erste elektrisch schaltbare optische Schicht (220), eine zweite leitende Schicht (230), eine zweite elektrisch schaltbare optische Schicht (240) und eine dritte leitende Schicht (250) umfasst, die nacheinander gestapelt sind,
wobei die erste leitende Schicht (210) einen ersten musterdefinierenden Abschnitt (212) und einen ersten Füllabschnitt (214) aufweist, wobei der erste musterdefinierende Abschnitt (212) ein erstes leitendes Muster definiert, wobei der erste Füllabschnitt (214) in einem Bereich angeordnet ist, der den ersten musterdefinierenden Abschnitt (212) ausschließt und von dem ersten musterdefinierenden Abschnitt (212) beabstandet ist,
die zweite leitende Schicht (230) eine gemeinsame Elektrode ist;
die dritte leitende Schicht (250) einen zweiten musterdefinierenden Abschnitt (252) und einen zweiten Füllabschnitt (254) aufweist, der zweite musterdefinierende Abschnitt (252) ein zweites leitendes Muster definiert und der zweite Füllabschnitt (254) in einem Bereich angeordnet ist, der den zweiten musterdefinierenden Abschnitt (252) ausschließt und von dem zweiten musterdefinierenden Abschnitt (252) beabstandet ist,
wobei sowohl das erste leitende Muster der ersten leitenden Schicht als auch das zweite leitende Muster der dritten leitenden Schicht als konzentrische Kreise, diagonale Linien oder bogenförmige Streifen dargestellt sind, und
wobei das erste leitende Muster der ersten leitenden Schicht (210) und das zweite leitende Muster der dritten leitenden Schicht (250) unterschiedlich sind;
einen Prozessor (500), der so konfiguriert ist, dass er die elektrisch schaltbare Musterstruktur (200) ansteuert, um sequentiell einen ersten Modus und einen zweiten Modus auszuführen,
wobei im ersten Modus eine Spannung an die erste leitende Schicht (210), die zweite leitende Schicht (230) und die dritte leitende Schicht (250) angelegt wird, so dass ein erster Abschnitt (222) der ersten elektrisch schaltbaren optischen Schicht (220), der dem ersten leitenden Muster entspricht, einen Trübungszustand aufweist, ein zweiter Abschnitt (224) der ersten elektrisch schaltbaren optischen Schicht (220) mit Ausnahme des ersten Abschnitts (222) der ersten elektrisch schaltbaren optischen Schicht (220) einen transparenten Zustand aufweist, und die zweite elektrisch schaltbare optische Schicht (240) den transparenten Zustand aufweist, und
in der zweiten Betriebsart eine Spannung an die erste leitende Schicht (210), die zweite leitende Schicht (230) und die dritte leitende Schicht (250) angelegt wird, so dass ein erster Abschnitt der zweiten elektrisch schaltbaren optischen Schicht, der dem zweiten leitenden Muster entspricht, einen Trübungszustand aufweist, ein zweiter Abschnitt der zweiten elektrisch schaltbaren optischen Schicht (240) mit Ausnahme des ersten Abschnitts der zweiten elektrisch schaltbaren optischen Schicht (240) einen transparenten Zustand aufweist und die erste elektrisch schaltbare optische Schicht den transparenten Zustand aufweist; und
ein Bilderfassungselement (300), das so konfiguriert ist, dass es das Licht (L) erfasst, das durch die elektrisch schaltbare Musterstruktur (200) hindurchtritt, um ein erstes Bild in der ersten Betriebsart und ein zweites Bild in der zweiten Betriebsart zu erzeugen.
wobei der Prozessor (500) ferner so konfiguriert ist, dass er eine Fingerabdruck-Identifikationsanalyse gemäß dem ersten Bild und dem zweiten Bild durchführt.

2. Die Fingerabdruck-Identifizierungsvorrichtung (10) nach Anspruch 1, wobei ein Material der ersten elektrisch schaltbaren optischen Schicht (220) oder der zweiten elektrisch schaltbaren optischen Schicht (240) ein in einem Polymer dispergiertes Flüssigkristallmaterial umfasst.

3. Die Fingerabdruck-Identifizierungsvorrichtung (10) nach Anspruch 1, wobei die elektrisch schaltbare Musterstruktur (200) ferner eine Vielzahl von Substratschichten (SUB) umfasst und die erste leitende Schicht (210), die zweite leitende Schicht (230) und die dritte leitende Schicht (250) jeweils auf entsprechenden der Substratschichten (SUB) angeordnet sind.

4. Die Fingerabdruck-Identifizierungsvorrichtung (10) nach Anspruch 1, wobei die elektrisch schaltbare Musterstruktur (200) ferner eine dritte elektrisch schaltbare optische Schicht (260), eine vierte leitende Schicht (270), eine vierte elektrisch schaltbare optische Schicht (280) und eine fünfte leitende Schicht (290) umfasst, wobei ein drittes leitendes Muster der fünften leitenden Schicht (290) von dem ersten leitenden Muster der ersten leitenden Schicht (210) und dem zweiten leitenden Muster der dritten leitenden Schicht (250) verschieden ist.

5. Die Fingerabdruck-Identifizierungsvorrichtung (10) nach Anspruch 1, wobei die vierte leitende Schicht (270) eine gemeinsame Elektrode ist.

6. Ansteuerungsverfahren für eine Fingerabdruck-Identifizierungsvorrichtung (10), wobei die Fingerabdruck-Identifizierungsvorrichtung (10) eine Lichtquelle (100), eine elektrisch schaltbare Musterstruktur (200) und ein Bilderfassungselement (300) umfasst, die Lichtquelle (100) so konfiguriert ist, dass sie ein Licht (L) zu einem Objekt (50) emittiert, die elektrisch schaltbare Musterstruktur (200) auf einem Übertragungsweg des von dem Objekt (50) reflektierten Lichts (L) angeordnet ist, die elektrisch schaltbare Musterstruktur (200) eine erste leitende Schicht (210), eine erste elektrisch schaltbare optische Schicht (220), eine zweite leitende Schicht (230), eine zweite elektrisch schaltbare optische Schicht (240) und eine dritte leitende Schicht (250) umfasst, die nacheinander gestapelt sind,
wobei die erste leitende Schicht (210) einen ersten musterdefinierenden Abschnitt (212) und einen ersten Füllabschnitt (214) aufweist, wobei der erste musterdefinierende Abschnitt (212) ein erstes leitendes Muster definiert, wobei der erste Füllabschnitt (214) in einem Bereich außerhalb des ersten musterdefinierenden Abschnitts (212) und beabstandet von dem ersten musterdefinierenden Abschnitt (212) angeordnet ist,
die zweite leitende Schicht (230) eine gemeinsame Elektrode ist;
die dritte leitende Schicht (250) einen zweiten musterdefinierenden Abschnitt (252) und einen zweiten Füllabschnitt (254) aufweist, der zweite musterdefinierende Abschnitt (252) ein zweites leitendes Muster definiert und der zweite Füllabschnitt (254) in einem Bereich angeordnet ist, der den zweiten musterdefinierenden Abschnitt (252) ausschließt und von dem zweiten musterdefinierenden Abschnitt (252) beabstandet ist,
wobei sowohl das erste leitende Muster der ersten leitenden Schicht als auch das zweite leitende Muster der dritten leitenden Schicht als konzentrische Kreise, diagonale Linien oder bogenförmige Streifen dargestellt sind, und
wobei das erste leitende Muster der ersten leitenden Schicht (210) und das zweite leitende Muster der dritten leitenden Schicht (250) unterschiedlich sind;
ein Prozessor (500) die elektrisch schaltbare Musterstruktur (200) ansteuert, um sequentiell einen ersten Modus und einen zweiten Modus auszuführen,
wobei im ersten Modus eine Spannung an die erste leitende Schicht (210), die zweite leitende Schicht (230) und die dritte leitende Schicht (250) angelegt wird, so dass ein erster Abschnitt (222) der ersten elektrisch schaltbaren optischen Schicht (220), der dem ersten leitenden Muster entspricht, einen Trübungszustand aufweist, ein zweiter Abschnitt (224) der ersten elektrisch schaltbaren optischen Schicht (220) mit Ausnahme des ersten Abschnitts (222) der ersten elektrisch schaltbaren optischen Schicht (220) einen transparenten Zustand aufweist, und die zweite elektrisch schaltbare optische Schicht (240) den transparenten Zustand aufweist, und
in dem zweiten Modus eine Spannung an die erste leitende Schicht (210), die zweite leitende Schicht (230) und die dritte leitende Schicht (250) angelegt wird, so dass ein erster Abschnitt der zweiten elektrisch schaltbaren optischen Schicht, der dem zweiten leitenden Muster entspricht, einen Trübungszustand aufweist, ein zweiter Abschnitt der zweiten elektrisch schaltbaren optischen Schicht (240), der den ersten Abschnitt der zweiten elektrisch schaltbaren optischen Schicht (240) ausschließt, einen transparenten Zustand aufweist und die erste elektrisch schaltbare optische Schicht den transparenten Zustand aufweist; und
ein Bildsensorelement (300), das das durch die elektrisch schaltbare Musterstruktur (200) hindurchtretende Licht (L) erfasst, um ein erstes Bild im ersten Modus und ein zweites Bild im zweiten Modus zu erzeugen.
wobei der Prozessor (500) eine Fingerabdruck-Identifikationsanalyse gemäß dem ersten Bild und dem zweiten Bild durchführt.

7. Das Ansteuerungsverfahren nach Anspruch 6, wobei ein Material der ersten elektrisch schaltbaren optischen Schicht (220) oder der zweiten elektrisch schaltbaren optischen Schicht (240) ein in einem Polymer dispergiertes Flüssigkristallmaterial umfasst.

8. Das Ansteuerungsverfahren nach Anspruch 6, wobei im ersten Modus:
die gleiche Spannung an den ersten musterdefinierenden Abschnitt (212) und die zweite leitende Schicht (230) angelegt wird, so dass der erste Abschnitt (222), der dem ersten leitenden Muster der ersten elektrisch schaltbaren optischen Schicht (220) entspricht, den Trübungszustand aufweist;
unterschiedliche Spannungen an den ersten Füllabschnitt (214) und die zweite leitende Schicht (230) angelegt werden, so dass der zweite Abschnitt (224) mit Ausnahme des ersten Abschnitts (222) der ersten elektrisch schaltbaren optischen Schicht (220) den transparenten Zustand aufweist; und
unterschiedliche Spannungen an die zweite leitende Schicht (230) und die dritte leitende Schicht (250) angelegt werden, so dass die zweite elektrisch schaltbare optische Schicht (240) den transparenten Zustand einnimmt.

9. Das Ansteuerungsverfahren nach Anspruch 6, wobei im zweiten Modus :
die gleiche Spannung an den zweiten musterdefinierenden Abschnitt (252) angelegt wird und die zweite leitende Schicht (230), so dass der dritte Abschnitt, der dem zweiten leitenden Muster der zweiten elektrisch schaltbaren optischen Schicht (240) entspricht, den Trübungszustand aufweist;
unterschiedliche Spannungen an den zweiten Füllabschnitt (254) und die zweite leitende Schicht (230) angelegt werden, so dass der vierte Abschnitt mit Ausnahme des dritten Abschnitts der zweiten elektrisch schaltbaren optischen Schicht (240) den transparenten Zustand aufweist; und
unterschiedliche Spannungen an die zweite leitende Schicht (230) und die erste leitende Schicht (210) angelegt werden, so dass die erste elektrisch schaltbare optische Schicht (220) den transparenten Zustand einnimmt.

10. Das Ansteuerungsverfahren nach Anspruch 6, wobei der erste Modus und der zweite Modus nacheinander ausgeführt werden, um das erste Bild bzw. das zweite Bild zu erfassen.

11. Das Ansteuerungsverfahren nach Anspruch 6, wobei das von dem Objekt (50) reflektierte Licht (L) mit dem ersten Muster oder dem zweiten Muster interferiert, um Interferenzstreifen zu erzeugen, so dass das Bildsensorelement (300) die Interferenzstreifen erfasst, um das erste Bild oder das zweite Bild zu erzeugen.

## Revendications

1. Un dispositif d'identification d'empreintes digitales (10), comprenant :
une source de lumière (100) pour émettre de la lumière (L) sur un objet (50) ;
une structure de motif commutable électriquement (200) disposée sur un chemin de transmission de la lumière (L) réfléchie par l'objet (50), et dans lequel la structure de motif commutable électriquement (200) comprend une première couche conductrice (210), une première couche optique commutable électriquement (220), une deuxième couche conductrice (230), une deuxième couche optique commutable électriquement (240) et une troisième couche conductrice (250) empilées successivement,
la première couche conductrice (210) comprenant une première partie de définition de motif (212) et une première partie de remplissage (214), la première partie de définition de motif (212) définissant un premier motif conducteur, la première partie de remplissage (214) étant située dans une zone excluant la première partie de définition de motif (212) et étant espacée de la première partie de définition de motif (212),
la deuxième couche conductrice (230) est une électrode commune ;
la troisième couche conductrice (250) comprend une deuxième partie de définition de motif (252) et une deuxième partie de remplissage (254), la deuxième partie de définition de motif (252) définit un deuxième motif conducteur, et la deuxième partie de remplissage (254) est disposée dans une zone excluant la deuxième partie de définition de motif (252) et est espacée de la deuxième partie de définition de motif (252),
dans lequel à la fois le premier motif conducteur de la première couche conductrice et le deuxième motif conducteur de la troisième couche conductrice sont représentés par des cercles concentriques, des lignes diagonales ou des bandes en forme d'arc, et
dans lequel le premier motif conducteur de la première couche conductrice (210) et le deuxième motif conducteur de la troisième couche conductrice (250) sont différents ;
un processeur (500) configuré pour commander la structure de motif commutable électriquement (200) afin d'exécuter séquentiellement un premier mode et un second mode,
dans lequel, dans le premier mode, une tension est appliquée à la première couche conductrice (210), à la deuxième couche conductrice (230) et à la troisième couche conductrice (250), de sorte qu'une première partie (222) de la première couche optique commutable électriquement (220) correspondant au premier motif conducteur présente un état opacifié, une deuxième partie (224) de la première couche optique électriquement commutable (220), à l'exception de la première partie (222) de la première couche optique électriquement commutable (220), présente un état transparent, et la deuxième couche optique électriquement commutable (240) présente l'état transparent, et
une tension est appliquée à la première couche conductrice (210), à la deuxième couche conductrice (230) et à la troisième couche conductrice (250) dans le deuxième mode de fonctionnement, de sorte qu'une première partie de la deuxième couche optique commutable électriquement correspondant au deuxième motif conducteur présente un état opacifié, une deuxième partie de la deuxième couche optique commutable électriquement (240), à l'exception de la première partie de la deuxième couche optique commutable électriquement (240), présente un état transparent et la première couche optique commutable électriquement présente l'état transparent ; et
un élément d'acquisition d'image (300) configuré pour détecter la lumière (L) traversant la structure de motif commutable électriquement (200) afin de produire une première image dans le premier mode et une seconde image dans le second mode.
dans lequel le processeur (500) est en outre configuré pour effectuer une analyse d'identification d'empreinte digitale conformément à la première image et à la deuxième image.

2. Le dispositif d'identification d'empreintes digitales (10) selon la revendication 1, dans lequel un matériau de la première couche optique commutable électriquement (220) ou de la deuxième couche optique commutable électriquement (240) comprend un matériau à cristaux liquides dispersé dans un polymère.

3. Le dispositif d'identification d'empreintes digitales (10) selon la revendication 1, dans lequel la structure de motif commutable électriquement (200) comprend en outre une pluralité de couches de substrat (SUB), et la première couche conductrice (210), la deuxième couche conductrice (230) et la troisième couche conductrice (250) sont chacune disposées sur des couches respectives des couches de substrat (SUB).

4. le dispositif d'identification d'empreintes digitales (10) selon la revendication 1, dans lequel la structure de motif commutable électriquement (200) comprend en outre une troisième couche optique commutable électriquement (260), une quatrième couche conductrice (270), une quatrième couche optique commutable électriquement (280) et une cinquième couche conductrice (290), dans lequel un troisième motif conducteur de la cinquième couche conductrice (290) est différent du premier motif conducteur de la première couche conductrice (210) et du deuxième motif conducteur de la troisième couche conductrice (250).

5. Le dispositif d'identification d'empreintes digitales (10) selon la revendication 1, dans lequel la quatrième couche conductrice (270) est une électrode commune.

6. Un procédé de commande pour un dispositif d'identification d'empreintes digitales (10), le dispositif d'identification d'empreintes digitales (10) comprenant une source de lumière (100), une structure de motif commutable électriquement (200) et un élément de capture d'image (300), la source de lumière (100) étant configurée pour émettre une lumière (L) vers un objet (50), la structure de motif électriquement commutable (200) est disposée sur un trajet de transmission de la lumière (L) réfléchie par l'objet (50), la structure de motif électriquement commutable (200) comprend une première couche conductrice (210), une première couche optique électriquement commutable (220), une deuxième couche conductrice (230), une deuxième couche optique électriquement commutable (240) et une troisième couche conductrice (250), qui sont empilées successivement,
dans laquelle la première couche conductrice (210) comprend une première partie de définition de motif (212) et une première partie de remplissage (214), la première partie de définition de motif (212) définissant un premier motif conducteur, la première partie de remplissage (214) étant située dans une zone à l'extérieur de la première partie de définition de motif (212) et espacée de la première partie de définition de motif (212), la deuxième couche conductrice (230) est une électrode commune ;
la troisième couche conductrice (250) comprend une deuxième partie définissant un motif (252) et une deuxième partie de remplissage (254), la deuxième partie définissant un motif (252) définit un deuxième motif conducteur, et la deuxième partie de remplissage (254) est disposée dans une zone qui exclut la deuxième partie définissant un motif (252) et est espacée de la deuxième partie définissant un motif (252),
dans lequel à la fois le premier motif conducteur de la première couche conductrice et le deuxième motif conducteur de la troisième couche conductrice sont représentés par des cercles concentriques, des lignes diagonales ou des bandes en forme d'arc, et
dans lequel le premier motif conducteur de la première couche conductrice (210) et le deuxième motif conducteur de la troisième couche conductrice (250) sont différents ;
un processeur (500) commande la structure de motif commutable électriquement (200) pour exécuter séquentiellement un premier mode et un second mode,
dans lequel, dans le premier mode, une tension est appliquée à la première couche conductrice (210), à la deuxième couche conductrice (230) et à la troisième couche conductrice (250), de sorte qu'une première partie (222) de la première couche optique commutable électriquement (220) correspondant au premier motif conducteur présente un état opacifié, une deuxième partie (224) de la première couche optique électriquement commutable (220), à l'exception de la première partie (222) de la première couche optique électriquement commutable (220), présente un état transparent, et la deuxième couche optique électriquement commutable (240) présente l'état transparent, et
dans le deuxième mode, une tension est appliquée à la première couche conductrice (210), à la deuxième couche conductrice (230) et à la troisième couche conductrice (250) de sorte qu'une première partie de la deuxième couche optique électriquement commutable correspondant au deuxième motif conducteur présente un état opacifié, une deuxième partie de la deuxième couche optique électriquement commutable (240) excluant la première partie de la deuxième couche optique électriquement commutable (240) présente un état transparent, et la première couche optique électriquement commutable présente l'état transparent ; et
un élément de détection d'image (300) qui détecte la lumière (L) traversant la structure de motif commutable électriquement (200) pour produire une première image dans le premier mode et une seconde image dans le second mode.
dans lequel le processeur (500) effectue une analyse d'identification d'empreinte digitale conformément à la première image et à la deuxième image.

7. Le procédé de commande selon la revendication 6, dans lequel un matériau de la première couche optique commutable électriquement (220) ou de la deuxième couche optique commutable électriquement (240) comprend un matériau à cristaux liquides dispersé dans un polymère.

8. Le procédé de commande selon la revendication 6, dans lequel, dans le premier mode :
la même tension est appliquée à la première partie définissant le motif (212) et à la deuxième couche conductrice (230), de sorte que la première partie (222) correspondant au premier motif conducteur de la première couche optique commutable électriquement (220) présente l'état d'opacité ;
des tensions différentes sont appliquées à la première partie de remplissage (214) et à la deuxième couche conductrice (230), de sorte que la deuxième partie (224) présente l'état transparent à l'exception de la première partie (222) de la première couche optique commutable électriquement (220) ; et
des tensions différentes sont appliquées à la deuxième couche conductrice (230) et à la troisième couche conductrice (250), de sorte que la deuxième couche optique électriquement commutable (240) adopte l'état transparent.

9. Le procédé de commande selon la revendication 6, dans lequel, dans le deuxième mode :
la même tension est appliquée à la deuxième partie définissant le motif (252) et à la deuxième couche conductrice (230), de sorte que la troisième partie correspondant au deuxième motif conducteur de la deuxième couche optique commutable électriquement (240) présente l'état d'opacité ;
des tensions différentes sont appliquées à la deuxième partie de remplissage (254) et à la deuxième couche conductrice (230), de sorte que la quatrième partie, à l'exception de la troisième partie de la deuxième couche optique commutable électriquement (240), présente l'état transparent ; et
des tensions différentes sont appliquées à la deuxième couche conductrice (230) et à la première couche conductrice (210), de sorte que la première couche optique électriquement commutable (220) adopte l'état transparent.

10. le procédé de commande selon la revendication 6, dans lequel le premier mode et le deuxième mode sont exécutés successivement pour acquérir respectivement la première image et la deuxième image.

11. Le procédé de commande selon la revendication 6, dans lequel la lumière (L) réfléchie par l'objet (50) interfère avec le premier motif ou le second motif pour produire franges d'interférence, de sorte que l'élément de détection d'image (300) détecte les franges d'interférence pour produire la première image ou la seconde image.
